Europäisches Patentamt

(19) European Patent Office

Office européen des brevets

(11) Numéro de publication: **0 083 466**
**B1**

(12) **FASCICULE DE BREVET EUROPEEN**

(45) Date de publication du fascicule du brevet:
26.02.86

(51) Int. Cl.⁴: **A 01 K 1/062**

(21) Numéro de de ⸺: **82201674.7**

(22) Date de dépôt: **29.12.82**

(54) **Dispositif pour attacher un animal.**

(30) Priorité: **04.01.82 BE 2059531**
**28.04.82 BE 2059682**
**09.07.82 BE 2059771**

(43) Date de publication de la demande:
**13.07.83 Bulletin 83/28**

(45) Mention de la délivrance du brevet:
**26.02.86 Bulletin 86/9**

(84) Etats contractants désignés:
**AT BE CH DE FR IT LI LU NL SE**

(56) Documents cités:
**BE - A - 885 292**

(73) Titulaire: **Vandekeybus, Christiaan Adriaan Corneel,**
**Kloosterstraat 21, B-2190 Essen (BE)**

(72) Inventeur: **Vandekeybus, Christiaan Adriaan Corneel,**
**Kloosterstraat 21, B-2190 Essen (BE)**

(74) Mandataire: **De Rycker, Rudolf, Ir. et al, Vereenigde**
**Octrooibureaux Belgie S.A. Charlottalei 48,**
**B-2018 Antwerpen (BE)**

LIBER, STOCKHOLM 1986

## Description

L'invention est relative à un dispositif à fermeture et verouillage automatique pour attacher un animal, ce dispositif comprenant;

— un élément de suspension,
— un étrier ou carcan en plusieurs parties comportant deux parties latérales supérieures espacées suspendues avec articulation à cet élément de suspension autour d'axes d'articulation sensiblement perpendiculaires au plan général du carcon, lesdites parties supérieurs se prolongeant par leurs extrémités supérieures au-dessus de ces axes d'articulation, et comportant au moins un bras transversal solidaire d'une d'entre elles,
— des moyens élastiques à dépassement de point mort, qui, dans une position extrême, maintiennent les parties brasses desdites parties superieures en une position rapprochée de fermeture et, dans l'autre position extrême, maintiennent les parties basses des parties supérieures en une position écarté d'ouverture,
— un levier qui commande ces moyens pour les amener de la première position extrême, dans laquelle ils maintiennent les parties supérieures en position de fermeture, à l'autre position extrême, dans laquelle ils maintiennent les parties supérieures en position d'ouverture,
— un verrou qui, dans l'état de fermeture précité s'intercale entre et contre les extrémités supérieures des parties supérieures et, dans l'état d'ouverture précité n'engage pas lesdites extrémités supérieures, et
— une liaison entre le verrou et le levier.

Un dispositif de ce genre est connu d'après BE—A—885.292.

Dans ce dispositif connu le levier est articulé par rapport à une extrémité supérieure d'une partie supérieure du carcan et est utilisé comme verrou. L'ouverture du dispositif débute nécessairement par un soulèvement du levier qui est empoigné à son extrémité située en dehors de l'axe longitudinal de la stalle.

Après le déverrouillage réalisé par ce soulèvement le carcan doit encore être ouvert part une traction exercée sur une partie supérieure du carcan.

L'invention a pour but d'offrir un dispositif qui peut être déverrouillé en ouvert au moyen d'un seul levier sur lequel une simple traction vers le bas est exercée dans l'axe longitudinal de la stalle.

A cet effet le levier est articulé sur l'élément de suspension dans un plan vertical sensiblement perpendiculaire au plan du carcon et la bras transversal solidaire d'une des parties supérieures s'étend en direction de l'autre partie supérieures tandis que la levier engage le côté supérieur dudit bras transversal de manière à le faire pivoter ainsi que les parties latérales supérieures autour de leurs axes d'articulation sur l'élément de suspension.

Il est en outre à remarquer que dans le dispositif de BE—A—885.292 le levier, d'ailleurs non articulé par rapport à l'élément de suspension, ne commande qu'indirectement, c'est-à-dire par l'entremise des parties supérieures, les moyens maintenant ces parties dans leur position ouverte ou fermée.

L'organe d'actionnement du dispositif connu se trouve tout à fait à la partie supérieure et doit être repoussé vers le haut pour l'ouverture du dispositif. Ce dernier peut par conséquent surtout être utilisé lorsque divers dispositifs doivent être ouverts en commun par l'intermédiaire d'un élément qui s'étend sur toute la longueur de l'étable à une très grande hauteur, et il convient moins bien pour une utilisation dans le cas où chaque dispositif doit être ouvert séparément, au plus à hauteur de l'élément de suspension. Le dispositif suivant l'invention, au contraire, peut comporter son levier d'actionnement à hauteur de l'élément de suspension. Ce levier d'actionnement doit être tiré vers le bas pour l'ouverture du carcan. Le dispositif suivant l'invention convient donc très bien pour un agencement avec ouverture individuelle et possède un verrouillage fiable, simple et facile à actionner.

Dans une forme de réalisation avantageuse de l'invention, le levier est articulé sur l'élément de suspension autour d' un axe horizontal perpendiculaire aux axes d'articulation des parties supérieures sur l'élément de suspension.

De préférence, le levier traverse une fente qui est pratiquée dans l'élément de suspension.

Dans une forme de réalisation préférée de l'invention le dispositif comprend un bras transversal sur chacune des parties supérieures, bras transversaux qui, en position d'ouverture et de fermeture des parties supérieures, présentant respectivement leur extrémité opposée à la partie supérieure en dessous et au-dessus des axes d'articulation, et un ressort qui écarte lesdits bras transversaux l'une de l'autre, de telle sorte que les parties supérieures conservent leur position d'ouverture et leur position de fermeture, respectivement, le levier engageant au moins le côté supérieur de l'un de ces bras.

D'autres particularités et avantages de l'invention ressortiront de la description ci-après d'un dispositif suivant l'invention pour attacher un animal; cette description est uniquement donnée à titre d'exemple et ne limite pas l'invention; les références concernent les dessins annexés.

La figure 1 est une vue en élévation frontale d'une dispositif suivant l'invention pour attacher un animal, le carcan étant représenté en position d'ouverture.

La figure 2 est une vue en élévation frontale du dispositif suivant la figure 1, le carcan étant représenté en position de fermeture.

La figure 3 représente à plus grande échelle une partie de ce qu'illustre la figure 1.

La figure 4 est une vue en coupe suivant la ligne IV—IV à la figure 3.

La figure 5 représente à la même échelle qu'aux figures 3 et 4, une partie de ce qu'illustre la figure 2.

La figure 6 est une vue en coupe suivant la ligne VI—VI à la figure 5.

La figure 7 est une vue en coupe suivant la ligne VII—VII à la figure 6.

La figure 8 est une vue de dessus de l'objet de la figure 7.

Dans les diverses figures, les mêmes références concernent les mêmes éléments.

Le dispositif pour attacher un animal illustré aux dessins est monté dans une structure fixe dont font partie un plancher 1 et une poutre de toiture 2.

Ce dispositif est destiné à maintenir une vache attachée dans une station couché-et-debout. La direction transversale de cette station correspond à la direction de la poutre 2. La direction longitudinale lui est perpendiculaire. Il s'agit de la direction qui est prise par l'animal lorsqu'il pénètre dans la station couché-et-debout.

Le dispositif est constitué essentiellement par un élément de suspension 3 et un étrier ou carcan qui est lui-même constitué par un étrier inférieur 4 et des branches de carcan s'y raccordant. Chaque branche comporte une partie inférieure 5 et une partie supérieure 6. Les parties 5 et 6 sont reliées de façon articulée entre elles aussi bien qu'à l'élément de suspension 3 et l'étrier inférieur 4, d'une manière décrite plus en détail ci-après. Au repos, elles se trouvent dans un même plan, dit plan de carcan principal. Indépendamment du fait que le dispositif se trouve à l'état d'ouverture ou celui de fermeture, tels que décrits ci-après, l'ensemble du dispositif en équilibre a en tout cas son plan de carcan principal dans une direction qui correspond à la direction transversale de la station couché-et-debout.

Sur un côté du dispositif s'étendant au repos suivant la direction transversale de la station couché-et-debout, côté dit ci-après frontal, cette station possède une mangeoire. L'autre côté du dispositif est donc dénommé côté arrière.

L'élément de suspension 3, dans lequel sont suspendues avec articulation les parties supérieures 6 du carcan avec lequel l'animal est attaché, est constitué par une plaque frontale 14 et une plaque dorsale 15 qui s'étendent, en étant d'équilibre, dans le sens tranversal de la station, par une latte supérieure 13 reliant sur le côté supérieur les plaques 14 et 15, et par des séparateurs 16 qui relient de part et d'autre les plaques 14 et 15.

Pour permettre la suspension de l'élément de suspension 3, deux anneaux 7 sont posés autour de la poutre transversale 2. Chacun des anneaux 7 possède à la partie inférieure un oeillet 8 qu'engage le maillon supérieur d'une chaîne 9. Le maillon inférieur 10 de chaque chaîne 9 s'engage dans une ouverture qui est pratiquée dans le corps dirigé vers le haut d'un fer en T 11.

Le fer en T 11 est donc pendu par l'intermédiaire de deux chaînes 9 aux anneaux 7 et donc à la poutre supérieure 2. Etant donné que les chaînes 9 sont des éléments de suspension souples, elles cherchent sous l'influence du poids du fer en T 11 et de tout ce qui y est suspendu, à prendre la position dans laquelle leurs lignes d'axe sont parallèles entre elles. Au repos, ces lignes d'axe définissent un plan vertical qui s'étend parallèlement à la poutre supérieure 2, donc dans le sens transversal de la station couché-et-debout.

Il ressort de la description précédente que les parties supérieures 6 du carcan aussi se trouvent dans un plan transversal vertical quand le fer en T 11 s'étend dans un tel plan.

Sous l'influence de l'animal, le carcan et donc les parties de carcan 6 et le fer en T 11 peuvent être écartés du plan transversal, mais aussitôt que la force de la pesanteur peut agir librement, le carcan reviendra dans le plan transversal.

Le fer en T 11 forme un tout rigide avec la tige 12 et la latte supérieure 13 de l'élément de suspension 3 qui est soudée à cette tige. Un oeillet 52 qui se présente à la partie inférieure sur l'étrier inférieur 4, est relié par l'intermédiaire d'une chaîne 53 à un oeillet 54 qui est encastré dans le plancher 1 de la structure fixe. Le dispositif est donc monté entre la poutre supérieure 2 et le plancher 1, par l'intermédiaire de chaînes 9 et 53.

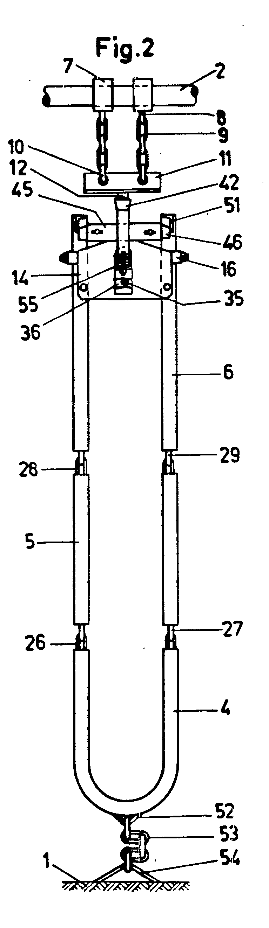

Lorsque le dispositif prend la position de fermeture illustrée à la figure 2, la chaîne 53 prend du mou, ce qui rend possible dans certaines limites, le mouvement de l'animal. Quand on veut limiter cette possibilité de mouvement, on peut relier directement entre eux, à la partie supérieure, des maillons des chaînes 9 qui ne sont pas adjacents, par exemple avec un simple crochet, ce qui réduit le jeu dans la suspension.

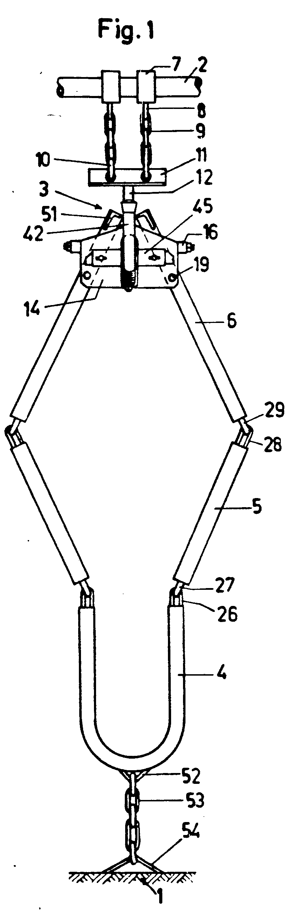

Lorsque le dispositif prend la position d'ouverture illustrée à la figure 1, les chaînes 9 et 53 sont tendues, de telle sorte que la possibilité de mouvement du dispositif ouvert est négligeable.

Les séparateurs 16 sont des pièces en U dont les branches 17 rencontrent les surfaces se faisant face des plaques 14 et 15 et dont les bases 18 déterminent l'espacement entre la plaque frontal 14 et la plaque dorsale 15. Les branches 17 sont donc parallèles au plan de carcan principal et les bases 18 sont donc perpendiculaires à ce plan. Par plan de carcan principal on entend le plan transversal de la station couché-et-debout dans lequel se trouvent notamment les parties de carcan 5 et 6 et l'étrier inférieur 4 quand le dispositif pend en équilibre à la position des figures 1 ou 2. A travers la plaque frontal 14 et la plaque dorsale 15 passent deux boulons 19 perpendiculaires à ces plaques et qui engagent avec leur tête 20 la face frontale de la plaque frontale 14. Sur le côté arrière, on a vissé sur chaque boulon 19, un écrou 21 qui s'applique contre la face dorsale de la plaque dorsale 15. Entre les plaques 14 et 15, un tube 22 entoure chaque boulon 19. Les tubes 22 se situent dans des ouvertures qui sont pratiquées dans les parties supérieures tubulaires 6 et leur sont soudés. Les boulons 19 forment donc des axes d'articulation parallèles pour les parties supérieures 6 et, à l'état de repos du dispositif, ces axes d'articulation sont approximativement horizontaux. Les extrémités supérieures de ces parties supérieures 6 font saillie au-dessus de ces axes d'articulation 19 qui sont toujours perpendiculaires au plan de carcan principal.

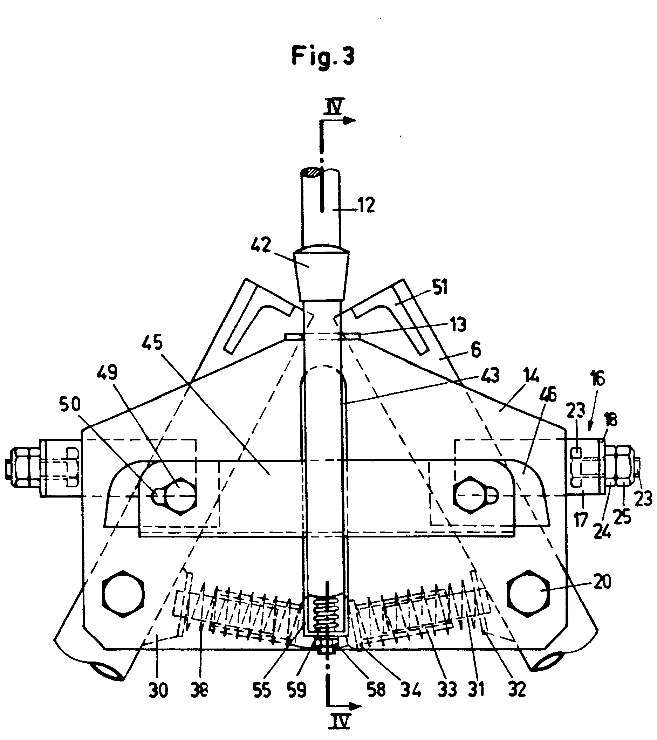

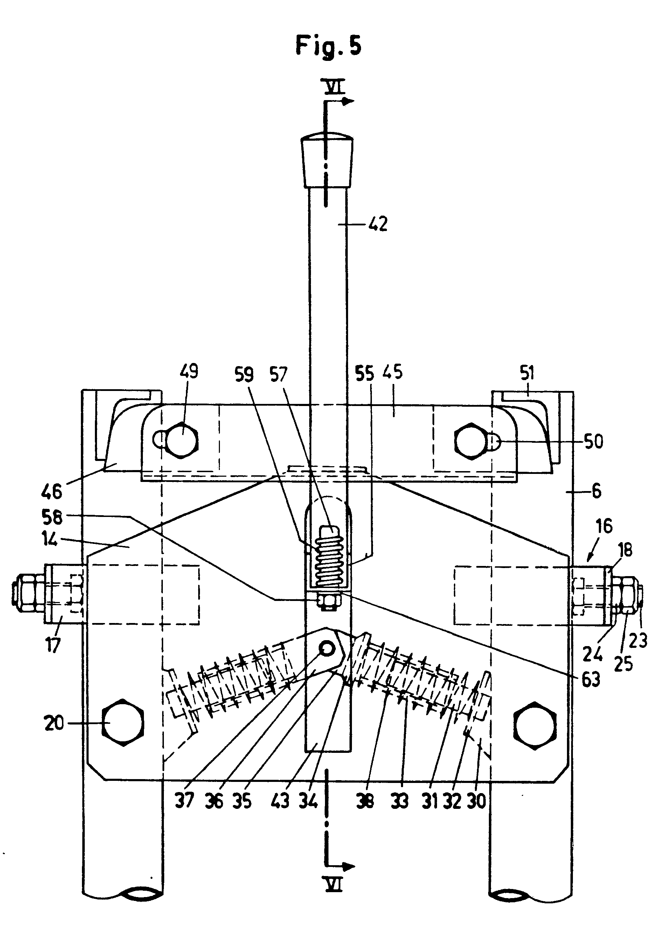

Par rapport à l'élément de suspension 3, les parties supérieures 6 peuvent prendre deux positions extrêmes, à savoir la position d'ouverture des figures 1 et 3 et la position de fermeture des figures 2 et 5.

La position d'ouverture est atteinte quand les parties supérieures 6 au cours de l'ouverture, engagent avec leurs extrémités supérieures la tige 12. La position de fermeture est atteinte lorsque les parties supérieures 6 au cours de la fermeture, engagent des boulons de réglage 23.

Dans la partie formant base 18 de chaque séparateur 16 est pratiquée une ouverture devant laquelle un écrou 24 est soudé sur la face extérieure. Un boulon 23 dont la tête se situe sur le côté intérieur, traverse cette ouverture, est vissé dans l'écrou 24 et est maintenu en position par un contre-écrou 25.

Dans la position de fermeture des figures 2 et 5, les parties supérieures 6 sont approximativement parallèles entre elles, mais étant donné que la position mutuelle des parties supérieures 6 en position de fermeture est fonction du réglage des boulons de réglage 23, ce parallélisme n'est pas absolument précis mais cependant suffisant pour un fonctionnement convenable du dispositif.

L'ajustage des boulons 23 est en particulier utilisé pour adapter l'écartement disponible entre les branches de carcan en position de fermeture, à la largeur de la partie la plus épaisse du cou de l'animal.

Ainsi qu'il ressort surtout de la figure 5, en position de fermeture les parties supérieures 6 se rapprochent au-dessus des axes d'articulation 19 et s'écartent en dessous de celles-ci lorsque les boulons de réglage sont ajustés de telle sorte que leurs têtes se rapprochent. L'animal debout présente la partie la plus épaisse de son cou à hauteur des parties inférieures 5 ou des zones inférieures des parties supérieures 6 des branches de carcan. L'espacement entre ces parties en position de fermeture doit donc être adapté à la largeur de la partie la plus épaisse du cou de l'animal.

L'espacement entre les parties inférieures 5 est fonction, d'une part, de la position des parties supérieures 6 en position de repos, position qui peut être ajustée avec les boulons de réglage 23 et, d'autre part, de l'espacement entre les branches de l'étrier inférieur 4. Pour disposer pour ce dernier espacement de différentes valeurs, on peut adopter des étriers inférieurs remplaçables.

Il est clair que l'on règle de la même manière l'écartement entre les parties supérieures 6 à la hauteur où se présente la partie la plus épasse du cou de l'animal.

Les directions indiquées ci-après des différents oeillets qui relient entre elles les parties de carcan se rapportent à l'état d'équilibre précité du plan de carcan principal et à la position de fermeture du dispositif.

A leurs extrémités inférieures, les parties supérieures 6 des branches de carcan portent des oeillets 29 qui sont parallèles au plan de symétrie longitudinal de la station couché-et-debout.

Dans les oeillets 29 s'engagent les oeillets 28 des extrémités supérieures des parties inférieures 5 du carcan. Les oeillets 28 sont parallèles au plan transversal vertical de la station couché-et-debout.

A leurs extrémités inférieures, les parties inférieures 5 des branches de carcan portent des oeillets 27 qui sont parallèles au plan de symétrie longitudinal de la station couché-et-debout.

Dans les oeillets 27 s'engagent les oeillets 26 des extrémités des branches de l'étrier inférieur 4. Les oeillets 26 sont parallèles au plan transversal vertical de la station couché-et-debout.

Les oeillets 26 et 27 et les oeillets 28 et 29 forment des articulations universelles qui permettent des mouvements de pivotement d'une partie supérieure 6 par par rapport à une partie inférieure 5 et d'une partie inférieure 5 par rapport à l'étrier inférieur, aussi bien dans le plan de carcan principal qu'en dehors de celui-ci.

Chaque partie supérieure 6 porte, approximativement à hauteur de son axe d'articulation 19, un bras transversal en plusieurs parties, de longueur variable. Ces bras forment un même angle fixe par rapport à la partie supérieure à laquelle elles appartiennent.

Chaque bras est constituée principalement d'une goupille fixe 31 et d'un petit tube 33 qui peut coulisser alternativement sur cette goupille 31. La goupille 31 est fixée sur la partie supérieure 6 avec une interposition de matière 30 qui fixe l'angle entre la goupille 31 et la partie supérieure 6. L'un des petits tubes 33 porte à son extrémité opposée à la partie supérieure 6, un collet 34 et au-delà de ce dernier, un prolongement 35. L'autre petit tube 33 porte à son extrémité opposée à la partie supérieure 6, une fourchette 36. Entre les branches de cette dernière se situe le prolongement 35 précité. Un petite arbre 37 parallèle aux axes d'articulation 19, traverse ce prolongement 35 et les branches de la fourchette 36, en formant par conséquent un axe d'articulation pour les deux petits tubes 33 et donc pour les bras auxquels ces petits tubes appartiennent. A hauteur de la matière de raccordement 30, chaque goupille porte un petit anneau fixe 32. Autour de chaque petit tube 33 se situe un ressort 38. Ces ressorts 38 s'appuient, d'une part, contre un petit anneau 32 et, d'autre part, contre le collet 34, et respectivement contre la fourchette 36. Le ressort 38 repousse donc une saillie du petit tube 33 (le collet 34 ou la fourchette 36) à partir d'une saillie de la goupille 31 (le petit anneau 32).

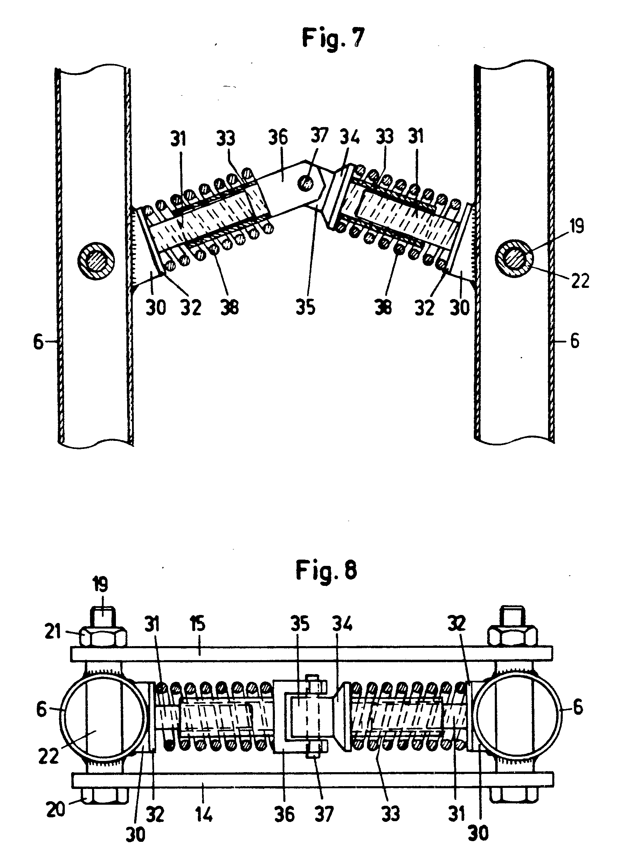

Dans la position de fermeture suivant les figures 2 et 5, qui est également celle représentée à la figure 7, le petit arbre 37 se trouve plus haut que les axes d'articulation 19. Les ressorts 38 essaient alors d'écarter encore plus fortement les extrémités supérieures des parties supérieures 6, mais ceci est empêché parce que les parties supérieures 6 s'appliquent contre les têtes des boulons de réglage 23.

Dans la position d'ouverture suivant les figures 1 et 3, l'arbre 37 se trouve plus bas que les axes d'articulation 19. Les ressorts 38 cherchent alors à rapprocher les extrémités supérieures des parties supérieures, mais ceci est empêché parce que les parties supérieures recontrent avec leurs extrémités supérieures, la tige 12.

La plaque dorsale 15 porte sur sa face arrière deux lèvres 39 dans lesquelles sont pratiquées des ouvertures pour un petit arbre 41. Autour de ce dernier s'articulent un levier 42 et un élément 55 à section transversale en U dans laquelle le levier 42 peut trouver place. Dans ce but, le levier 42 porte une pièce 56 dans laquelle est monté un tube 40 qui entoure le petit arbre 41. La partie de poignée du levier 42 se présente sur la face frontale du dispositif. La base de l'élément 55 à section transversale en U est traversée par une petite tige filetée 57 qui est solidaire de la surface inférieure du levier 42. Autour de cette petite tige 57 se trouve un ressort 59 qui écarte le levier 42 de l'élément 55 jusqu'à ce que ce dernier rencontre le petit écrou 58 qui est vissé sur la tige filetée 57, en dessous de l'élément 55. Entre cet écrou 58 et l'élément 55 est située une rondelle intercalaire 63.

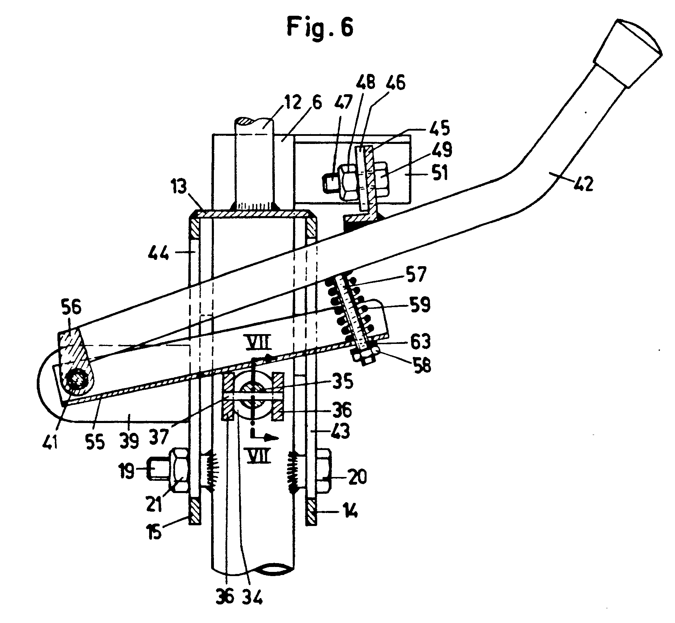

Normalement, l'élément 55 se trouve donc à une certaine distance du levier 42, comme représenté à la figure 6. Lorsqu'alors le levier 42 est tiré vers le bas et qu'ainsi l'élément 55 rencontre la fourchette 36, le levier 42 sera d'abord tiré dans l'élément 55, à l'encontre de l'action du ressort 59, avant que le levier 42 repousse, par l'intermédiaire de l'élément 55, la fourchette 36. Le levier 42 traverse une fente 43 qui est pratiquée dans la plaque frontale 14 et une fentre 44 pratiquée dans la plaque dorsale 15. Le levier 42 est donc manipulé depuis le côté avant, c'est-à-dire celui où se trouve la mangeoire.

Le levier 42 et l'élément 55 se trouvent au-dessus de l'arbre 37 et on peut donc, à l'aide du levier 42 et par l'intermédiaire de l'élément 55, exercer une pression sur la fourchette 36, de même qu'on peut relever avec la fourchette 36, le levier 42 et l'élément 55.

Le levier 42 qui s'étend dans un plan perpendiculaire au plan de carcan principal et comportant l'axe de symétrie vertical du carcan, porte un verrou transversal 45 avec deux parties coulissantes 46.

Lev verrou 45 est en forme de L et les parties coulissantes planes 46 sont serrées contre le côté relevé de cette pièce en forme de L 45, à l'aide de boulons 47 et d'écrous 48. Les boulons 47 present alors avec leurs têtes 49 le verrou 45, tandis que les écrous 48 exercent une pression sur les parties 46. Les boulons 47 traversent des fentes oblongues 50 qui sont pratiquées dans le verrou 45, de telle sorte que les parties 46 sont ajustables par rapport au verrou 45 et leur ajustage peut donc compenser l'usure et les tolérances de fabrication, tout en rendant aussi possible une adaptation à la longeur désirée du carcan en position de fermeture, donc une adaptation correspondant à celle obtenue par le réglage des boulons 23.

Les parties 46 possèdent des bords obliques qui rencontrent des bords correspondants de butées 51 qui sont solidaires des parties supérieures 6. Ces butées 51 ont une forme en L en section transversale suivant le plan de carcan principal. Les bords précités des deux butées 51 font un angle aigu s'ouvrant vers le bas.

Ainsi qu'il ressort en particulier des figures 1, 3 et 4, le levier 42 prend sa position la plus basse lorsque le carcan est ouvert. Le carcan est ouvert lorsque les portions des parties supérieures 6 se trouvant en dessous des axes d'articulation 19 sont écartées l'une de l'autre et quand les extrémités supérieures de ces parties supérieures 6 rencontrent la tige 12. Les parties inférieures 5 des branches de carcan sont alors aussi écartées l'une de l'autre, l'étrier inférieur 4 est relevé au maximum et la chaîne 53 est tendue.

L'animal qui pénètre dans la station couché-et-debout, se dirige vers les aliments dans la mangeoire et repousse alors avec son épaule les parties inférieures 5 du carcan. De ce fait, le carcan est poussé à hauteur de ces parties inférieures 5 vers la mangeoire et étant donnée que la chaîne 53 est déjà tendue, le mouvement des parties inférieures 5 du carcan vers la mangeoire n'est possible qu'en augmentant l'écartement entre les axes 19, d'une part, et les oeillets 27, d'autre part. Les parties inférieurs 5 doivent donc se rapprocher et les portions des parties supérieures 6 se trouvant en dessous des axes d'articulation 19, doivent également se rapprocher. Cette dernière opération a pour conséquence que les goupilles 31 qui sont dirigées vers le bas en position d'ouverture du carcan, sont amenées vers le haut, de telle sorte que les ressorts 38 sont comprimés jusqu'à ce que les goupilles 31 aient atteint leur position horizontale. Dès que les goupilles sont parvenues un peu au-dessus de la position horizontale, les ressorts 38 peuvent à nouveau se détendre, détente qui contribue à son tour au rapprochement des portions des parties supérieures 6 se trouvant en dessous des axes d'articulation et par conséquent aussi au rapprochement des parties inférieures 5 des branches de carcan.

La transition de la position d'ouverture des branches de carcan à celle de fermeture qui est mise en route par l'animal à l'encontre de l'action des ressorts 38, est donc poursuivie grâce à l'action de ces ressorts, de telle sorte que les branches de carcan parviennent à la position de fermeture illustrée aux figures 2, 5 et 6.

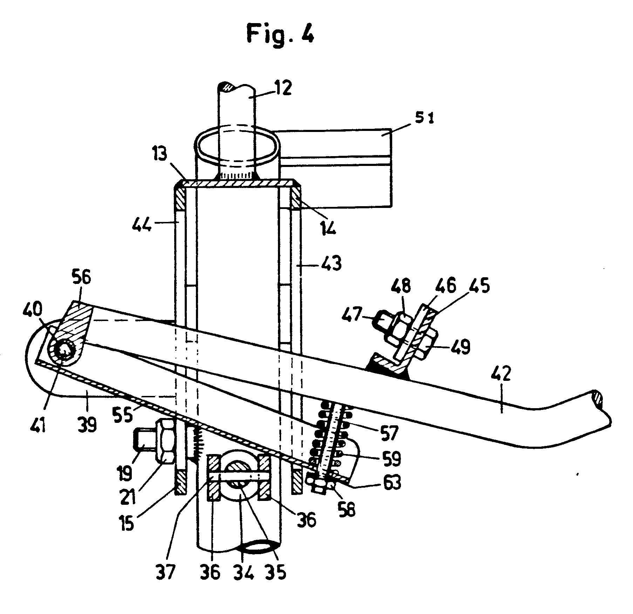

L'élément 55 est alors soulevé par la fourchette et relève donc aussi le levier 42 à partir de la position suivant la figure 4 vers celle de la figure 6, ce qui amène le verrou 45 entre les butées 51, les parties 46 du verrou 45 recontrant ainsi les butées 51. Dans l'état de fermeture, le dispositif est donc verrouillé, de telle sorte que l'animal ne peut plus par lui-même ramener le dispositif de la position fermée à la position ouverte.

Pour amener la carcan de la position de fermeture suivant les figures 25 et 6 à celle d'ouverture suivant les figures 1, 3 et 4, on tire le levier 42 vers le bas. De ce fait, le verrou 45 avec ses parties ajustables 46 passe d'entre les butées 51 sur les extrémités supérieures des parties supérieures 6 des branches de carcan. Le carcan est ainsi déverrouillé. Lors de ce déverrouillage, l'élément 55 repose sur la fourchette 36. Le levier 42 entre dans l'élément 55 à l'encontre de l'action du petit ressort 59, mais la force de ce dernier, avant qu'il ne soit complètement comprimé, n'est pas suffisante pour transmettre le mouvement de descentre du levier 42 à la fourchette 36.

Après que le levier 42 à été amené suffisamment bas pour, d'une part, que le verrou 45 soit parvenu en dessous des butées 51 et, d'autre part, que le ressort 59 soit complètement comprimé, le levier 42, par l'intermédiaire de l'élément 55, presse aussi suffisamment sur la fourchette 36. De ce fait, les bras composés dont font partie les goupilles 31 sont repoussées vers le bas à l'encontre de l'action des ressorts 38. Ainsi, les portions des parties supérieures 6 se trouvant au-dessus des axes d'articulation 19 sont amenées l'une vers l'autre et les portions de ces parties supérieures 6 se trouvant en dessous des axes d'articulation 19, sont écartées l'une de l'autre, ce qui écarte aussi l'une de l'autre les parties inférieures 5 des branches de carcan et donc amène le carcan en position d'ouverture. Dès que l'arbre 31 est parvenu plus bas que les axes d'articulation 19, les ressorts 38, qui ont d'abord été comprimés, contribuent à l'ouverture du carcan.

Le déverrouillage et l'ouverture sont donc réalisés l'un après l'autre grâce à un même levier. Le levier 42 est en effet relié, d'une part, au verrou 45, mais il agit, d'autre part, sur les moyens constitués par les goupilles 31 et les pièces qui leur sont reliées, qui maintiennent dans une position extrême, les parties supérieures 6 des branches de carcan dans un état de fermeture et maintiennent dans une autre position extrême, ces parties supérieures 6 avec leurs extrémités supérieures se faisant face, en un état d'ouverture.

**Revendications**

1. Dispositif à fermeture et verrouillage automatique pour attacher un animal, ce dispositif comprenant;

— un élément de suspension (3),
— un étrier ou carcan en plusieurs parties (4, 5, 6) comportant deux parties latérales supérieures (6) espacées suspendues avec articulation à cet élément de suspension (3) autour d'axes d'articulation (19) Sensiblement perpendiculaires au plan général du carcan, lesdites parties supérieures se prolongeant, par leurs extrémités supérieures au-dessus de ces axes d'articulation (19) et comportant au moins un bras transversal solidaire d'une d'entre elles,
— des moyens (30—38) élastiques à dépassement de point mort qui, dans une position extrême, maintiennent les parties basses desdites parties supérieures (6) en une position rapprochée de fermeture et, dans l'autre position extrême, maintiennent les parties basses des parties supérieures (6), en une position écartée d'ouverture,
— un levier (42) qui commande ces moyens (30—38) pour les amener de la première position extrême, dans laquelle ils maintiennent les parties supérieures (6) en position de fermeture, à l'autre position extrême, dans laquelle ils maintiennent les parties supérieures (6) en position d'ouverture,
— un verrou (45, 46) qui, dans l'état de fermeture précité, s'intercale entre et contre les extrémités supérieures des parties supérieures et, dans l'etat d'ouverture précité, n'engage pas lesdites extrémités supérieures, et
— une liaison entre le verrou (45) et le levier (42), caractérisé en ce que
— le levier de commande (42) est articulé sur l'élément de suspension (3) dans un plan vertical sensiblement perpendiculaire au plan du carcan et le bras transversal solidaire d'une des parties supérieures s'étend en direction de l'autre partie supérieures tandis que le levier engage le côté supérieur dudit bras transversale de manière à le faire pivoter ainsi qui les parties latérales supérieures autour de leurs axes d'articulation sur l'élément de suspension.

2. Dispositif suivant la revendication précédente, caractérisé en ce que le levier (42) est articulé par rapport à l'élément de suspension (3) autour d'un axe horizontal (41) perpendiculaire aux axes d'articulation (19) des éléments supérieurs (6) par rapport à l'élément de suspension (3).

3. Dispositif suivant la revendication 2, caractérisé en ce que le levier (42) traverse une fente (43, 44) pratiquée dans l'élément de suspension (3).

4. Dispositif suivant l'une quelconque des revendications précédentes, caractérisé en ce qu'il comprend un bras transversal (30—35/30—33; 36) solidaire de chacune des parties supérieures (6), bras transversaux qui, en position d'ouverture et de fermeture des parties supérieures (6), présentent respectivement leur extrémité (34, 35/36) opposée à la partie supérieure en dessous et au-dessus des axes d'articulation (19), et un ressort (38) qui écarte lesdits bras transversaux (30—35/30—33, 36) l'un de l'autre, de telle sorte que les parties supérieures conservent leur position d'ouverture et leur position de fermeture, respectivement, le levier (42) engageant au moins le côté supérieur de l'un de ces bras.

5. Dispositif suivant la revendication 4, caractérisé en ce que les deux bras transversaux (30—35/30—33, 36) sont reliées de façon articulée et l'un des bras (30—35/30—33, 36) a une longueur variable.

6. Dispositif suivant la revendication 5, caractérisé en ce que le bras transversal (30—35/30—33, 36) de longueur variable est constitué par une goupille (31) solidaire d'une partie supérieure (6) et par un petit tube (33) coulissant sur cette goupille, et le ressort (38) écarte une saillie (32) de la goupille d'une saillie (34, 36) du petit tube (33).

7. Dispositif suivant l'une des revendications 5 et 6, caractérisé en ce que les deux bras transversaux (30—35/30—33, 36) ont une longueur variable.

8. Dispositif suivant l'une quelconque des revendications précédentes, caractérisé en ce que le verrou (45) est solidaire du levier (42).

9. Dispositif suivant l'une quelconque des revendications précédentes, caractérisé en ce que les extrémités supérieures des éléments supérieurs (6) sont dotées de butées rapportées (51) pour le verrou (45, 46).

10. Dispositif suivant l'une quelconque des revendications précédentes, caractérisé en ce que le verrou (45) présente sur un côté au moins, une saillie ajustable (46).

11. Dispositif suivant la revendication 10, caractérisé en ce que le verrou (45) presente de part et d'autre une saillie ajustable (46).

12. Dispositif suivant l'une quelconque des revendications précédentes, caractérisé en ce que le levier (42) porte un élément (55) dirigé vers les moyens précités (30—38), élément qui est articulé par rapport au levier (42) et repousse élastiquement ce dernier.

13. Dispositif suivant la revendication 12, caractérisé en ce que le dernier élément précité (55) a une section transversale en U et le levier (42) peut trouver place dans la partie ouverte de la section transversale en U, à l'encontre de l'action de ressort.

14. Dispositif suivant la revendication 4 et l'une des revendications 12 et 13, caractérisé en ce que l'élément cité en dernier lieu engage le côté supérieur de l'un des bras transversaux (30—35/30—33, 36).

15. Dispositif suivant l'une quelconque des revendications précédentes, caractérisé en ce qu'en position de fermeture, une partie supérieure (6) engage un élément de butée (23) monté de façon ajustable sur l'élément de suspension (3).

16. Dispositif suivant la revendication 15, caractérisé en ce qu'en position de fermeture, chaque partie supérieure (6) engage un élément de butée (23) monté de façon ajustable sur l'élément de suspension (3), et ces éléments de butée (23) sont dirigés l'un vers l'autre.

**Patentansprüche**

1. Bindevorrichtung zum Fesseln von Tieren mit automatischer Schliessung und Verriegelung mit

— einem Aufhängemittel (3),

— einer mehrteiligen Halsschelle (4, 5, 6) die zwei voneinander entfernte, an diesem Aufhängemittel (3) um nahezu senkrecht zur allgemeinen Ebene der vorgenannten Halsschelle (4, 5, 6) stehende Achsen (19) angelenkte obere Seitenteile (6) aufweist, welche sich mit ihren oberen Enden oberhalb dieser Gelenkachsen (19) erstrecken und mit wenigstens einem Querelement versehen sind, das am einem der beiden Teile befestigt ist,

— elastischen Mitteln mit Totpunktüberschreitung (30—38), welche in einer Extremstellung die unteren Enden der vorgenannten oberen Teile (6) in einer naheliegenden Schliesstellung zusammenhalten und in der anderen Extremstellung die unteren Enden der oberen Teile (6) in einer entfernten Öffnungsstellung halten,

— einem Steuerhebel (42), dessen Aufgabe es ist die vorgenannten elastischen Mittel (30—38) von der ersten Extremstellung, in der sie die oberen Teile (6) in Schliesstellung zusammenhalten, in die andere Extremstellung zu bringen, in der sie die obere Teile (6) in Öffnungsstellung halten,

— einem Riegel (45, 46) der, in der vorgenannten Schliessstellung, zwischen den oberen Enden der oberen Teile (6) geschoben und gegen dieselben herangeschoben ist, und in der vorgenannten Öffnungsstellung diese oberen Enden nicht beansprucht, und

— einer Verbindung zwischen dem Riegel (45) und dem Hebel (42), dadurch gekennzeichnet, dass

— der Steuerhebel (42) in einer nahezu senkrecht zur allgemeinen Ebene der Halsschelle stehenden Vertikalebene am vorgenannten Aufhängemittel (3) angelenkt ist;

— das vorgenannte an einem der oberen Teile (6) befestigte Querelement (30—36) sich in der Richtung des zweiten oberen Teiles erstreckt;

— und der vorgenannte Hebel (42) derart mit der Oberseite des vorgenannten Querelementes (30—36) zusammenwirkt, dass er die Schwenkung desselben, sowie die Schwenkung der oberen Seitenteile (6) um die Gelenkachsen womit sie am vorgenannten Aufhängemittel angelenkt sind, steuert.

2. Vorrichtung gemäss dem vorhergehenden Anspruch, dadurch gekennzeichnet, dass der Hebel (42) um eine Horizontalachse (41) am Aufhängemittel (3) angelenkt ist, welche senkrecht zu den Gelenkachsen (19), um die die oberer Teile (6) am Aufhängemittel (3) angelenkt sind, steht.

3. Vorrichtung gemäss dem Anspruch 2, dadurch gekennzeichnet, dass der Hebel (42) durch eine Spalte (43, 44) des Aufhängemittels (3) hindurchsteckt.

4. Vorrichtung gemäss irgendeinem der vorhergehenden Ansprüche, dadurch gekennzeichnet, dass an jedem der beiden oberen Teile (6) ein Querelement (30—35/30—33, 36) befestigt ist, wobei das dem entsprechenden oberen Teil (6) gegenüberstehende Ende dieser Querelemente, in der Öffnungsstellung und der Schliesstellung der oberen Teile (6) sich unterhalb bzw. oberhalb der Gelenkachsen (19) befindet, dass ausserdem eine Feder (38) vorgesehen ist, deren Aufgabe es ist die vorgenannten Querelemente (30—35/30—33, 36) derart von einander zu entfernen, dass die oberen Teile in ihrer Öffnungsstellung bzw. Schliessstellung stehen bleiben, und dass der Hebel (42) wenigstens die Oberseite eines der Querelemente beansprucht.

5. Vorrichtung gemäss dem Anspruch 4, dadurch gekennzeichnet, dass die zwei Querelemente (30—35/30—33, 36) aneinander gelenkt sind und eines dieser Querelemente eine veränderliche Länge hat.

6. Vorrichtung gemäss dem Anspruch 5, dadurch gekennzeichnet, dass das Querelement (30—35/30—33, 36) veränderlicher Länge aus einem, an einem der oberen Teile (6) befestigten Zapfen (31) und einem auf diesem Zapfen schiebenden Röhrchen (33) besteht, wobei ein Vorsprung (32) des Zapfens (31) durch die Feder (38) in einer Entfernung von einem Vorsprung (34, 36) des Röhrchens (33) gehalten wird.

7. Vorrichtung gemäss irgendeinem der Ansprüche 5 und 6, dadurch gekennzeichnet, dass die beiden Querelemente (30—35/30—33, 36) eine veränderliche Länge haben.

8. Vorrichtung gemäss irgendeinem der vorhergehenden Ansprüche, dadurch gekennzeichnet, dass der Riegel (45) am Hebel (42) befestigt ist.

9. Vorrichtung gemäss irgendeinem der vorhergehenden Ansprüche, dadurch gekennzeichnet, dass die oberen Enden der oberen Teile (6) mit aufgesetzten Anschlägen (51) für den Riegel (45, 46) versehen sind.

10. Vorrichtung gemäss irgendeinem der vorhergehenden Ansprüche, dadurch gekennzeichnet, dass der Riegel (45) wenigstens an einer Seite mit einem verstellbaren Vorsprung (46) versehen ist.

11. Vorrichtung gemäss dem Anspruch 10, dadurch gekennzeichnet, dass der Riegel (45) beiderseits mit einem verstellbaren Vorsprung (46) versehen ist.

12. Vorrichtung gemäss irgendeinem der vorhergehenden Ansprüche, dadurch gekennzeichnet, dass der vorgenannte Hebel (42) mit einem nach den vorgenannten Elementen (30—38) gerichteten Element (55) versehen ist, das am Hebel (42) angelenkt ist und ihn elastisch zurückstösst.

13. Vorrichtung gemäss dem Anspruch 12, dadurch gekennzeichnet, dass das letzlich vorgenannte Element (55) U-förmig profiliert ist und der Hebel (42) sich entgegen der Federkraft in die Rille dieses U-förmig profilierten Elementes (55) hineinzuschieben vermag.

14. Vorrichtung gemäss Anspruch 4 und einem der Ansprüche 12 und 13, dadurch gekennzeichnet, dass das letzlich vorgenannte Element (55) mit der Oberseite eines der Querelemente (30—35/30—33, 36) zusammenwirkt.

15. Vorrichtung gemäss irgendeinem der vorhergehenden Anspruch, dadurch gekennzeichnet, dass einer der oberen Teile (6) in der Schliessstellung gegen einen verstellbaren Anschlag (23) des vorgenannten Aufhängemittel (3) heranstösst.

16. Vorrichtung gemäss dem Anspruch 15, dadurch gekennzeichnet, dass jeder der oberen Teile (6) in der Schliessstellung gegen einen verstellbaren Anschlag (23) des vorgenannten Aufhängemittel (3) heranstösst und die betreffenden Anschläge nach einander gerichtet sind.

**Claims**

1. Automatically closing and locking device for tying up an animal, this device comprising:

— a suspension element (3),
— a multipart yoke (4, 5, 6) comprising two spaced top side parts (6) which are hingedly suspended from said suspension element (3) about hinge axes (19) substantially at right angle to the general yoke plane, said top parts being extended with the top ends thereof above said hinge axes (19) and comprising at least one crosswise arm integral with one of said parts,
— resilient means with dead centre overshooting (30—38) which in the one end position, retain the lower portions of said top parts (6) in a close closed position, and in the other end position, retain the lower portions of the top parts (6) in a spread opening position,
— a lever (42) which operates said means (30—38) to bring same from the first end position in which they retain the top parts (6) in closed position, to the other end position in which they retain the top parts in opened position,
— a bolt (45, 46) which in said closed condition, fits between and against the top ends of the top parts, and in said opened condition, does not engage said top ends, and
— a connection between the bolt (45) and the lever (42), characterized
— in that the operating lever (42) is hinged on the suspension element (3) in a vertical plane substantially at right angle to the general yoke plane,
— in that said crosswise arm (30—36) integral with the one top part extends in the direction of the other top part,
— and in that said lever (42) engages the top side of said crosswise arm (30—36) in such a way as to cause same to swing as well as the top side parts (6) about the hinge axes thereof on the suspension element.

2. Device according to the preceding claim, characterized in that the lever (42) is hinged relative to the suspension element (3) about a horizontal axis (41) at right angle to the hinge axes (19) of the top elements (6) relative to the suspension element (3).

3. Device according to claim 2, characterized in that the lever (42) passes through a slot (43, 44) provided in the suspension element (3).

4. Device according to any one of the preceding claims, characterized in that it comprises a crosswise arm (30—35/30—33, 36) integral with each one of the top parts (6), which crosswise arms in the opened and closed position of the top parts (6), have respectively that end thereof (34, 35/36) opposite the top part, below and above the hinge axes (19), and a spring (38) which spreads said crosswise arms (30—35/30—33, 36) from one another, in such a way that the top parts retain the opened position thereof and the closed position thereof respectively, the lever (42) engaging at least the top side of one of said arms.

5. Device according to claim 4, characterized in that both crosswise arms (30—35/30—33, 36) are hingedly connected, and one arm (30—35/30—33, 36) has a varying length.

6. Device according to claim 5, characterized in that the crosswise arm (30—35/30—33, 36) with varying length is comprised of a pin (31) fast to a top part (6) and a small tube (33) sliding on said pin, and the spring (38) moves a projection (32) of the pin away from a projection (34, 36) of the small tube (33).

7. Device according to one of the claims 5 and 6, characterized in that both crosswise arms (30—35/30—33, 36) have a varying length.

8. Device according to any one of the preceding claims, characterized in that the bolt (45) is fast to the lever (42).

9. Device according to any one of the preceding claims, characterized in that the top ends of the top elements (6) are provided with added stops (51) for the bolt (45, 46).

10. Device according to any one of the preceding claims, characterized in that the bolt (45) has on one side at least, an adjustable projection (46).

11. Device according to claim 10, characterized in that the bolt (45) has on either side, an adjustable projection (46).

12. Device according to any one of the preceding claims, characterized in that the lever (42) bears an element (55) facing said means (30—38), which element is hinged relative to the lever (42) and pushes same resiliently away.

13. Device according to claim 12, characterized in that said latter element (55) has a U-shaped cross-section, and the lever (42) may be received inside the open portion of the U-shaped cross-section, against the spring action.

14. Device according to claim 4 and one of claims 12 and 13, characterized in that said latter-mentioned element engages the top side of the one crosswise arm (30—35/30—33, 36).

15. Device according to any one of the preceding claims, characterized in that in closed position, a top part (6) engages a stop element (23) adjustably mounted on the suspension element (3).

16. Device according to claim 15, characterized in that in closed position, each top part (6), engages a stop element (23) adjustably mounted on the suspension element (3), and said stop elements (23) face one another.

Fig. 1

Fig.2

0 083 466

# Fig. 3

5

# Fig. 4

# Fig. 5

# Fig. 6

## Fig. 7

## Fig. 8